# EUROPEAN PATENT APPLICATION

(11) **EP 3 257 576 A1**
(43) Date of publication of application: **20.12.2017**
(21) Application number: 16207132.8
(22) Date of filing: 28.12.2016
(51) Int. Cl.: B01J 20/06, B01J 20/32, C02F 1/68, C02F 1/48

(54) **PREPARATION PROCESS OF FUNCTIONALIZED SUPERPARAMAGNETIC ADSORBENTS WITH ETHYLTRIMETHOXYSILANE (ETMS) AS PRECURSOR**

(30) Priority: 15.06.2016 SI 201600149
(71) Applicant: Univerza v Mariboru Fakulteta za strojnistvo, 2000 Maribor (SI); IOS, Institut za okoljevarstvo in senzorje, d.o.o., 2000 Maribor (SI)
(72) Inventor: Kosak, Aljosa, 3000 Celje (SI); Lobnik, Aleksandra, 2311 Hoce (SI)
(74) Representative: Flak, Antonija

(57) **Abstract**

The subject of invention falls within the field of procedures for the removal of oily stains from the water, more precisely within the field of preparation procedures of superparamagnetic adsorptive nanomaterials based on iron oxide nanoparticles.

Preparation process of functionalized superparamagnetic adsorbents with ethyltrimethoxy (ETMS) as precursor allows preparation of adsorbents which enable adsorption of oil stains with a capacity in the range 2.0 to 4.0 g of oil/g of adsorbent, and nanostructured core based on iron oxide nanoparticles CoFe₂O₄ with spinel crystal structure, enabling responsiveness and maneuverability of nanostructures under the influence of an external magnetic field and further, via the functionality of the surface, adsorption and removing of oil stains, recovery and re-use.

## Description

### Field of invention

The present invention belongs to the field of procedures for removing oil stains from water, more precisely to the field of methods for preparation of superparamagnetic adsorptive nanomaterials based on iron oxide nanoparticles.

### Technical problem

The invention is based on the problem of how to synthesize nanoparticles to have such physico-chemical properties that will be useful for adsorption of oil stains and oil spills in waters. Nanoparticles should have iron oxide spinel crystal structure with functional organic coating based on alkoxide precursors. Magnetic properties of nanoparticles would allow the removal of nanoparticles, after the adsorption of oils from the solution, with the aid of an external magnetic field.

Classical methods of cleaning oil spills do not give satisfactory results in removing the oil from the water, but the functional nanomaterials show the potential to be able to become cost effective, efficient and environmentally friendly solutions, also in terms of conservation of raw materials from natural resources. Known are different ways of removing oil spills, for example the aerogels, dispersants, membranes, foams and nets, filters, etc., which have a great capacity to adsorb oil stains, but their use has a number of disadvantages associated with the recovery and reuse. Among the existing methods for cleaning oil stains from water, in the spotlight increasingly penetrates the use of different adsorptive materials, such as silicon dioxide, titanium dioxide, zinc oxide, aluminum oxide, etc., which are not biodegradable and can hardly be regenerated and reused, causing a high risk of secondary pollution.

The development of nanotechnology has opened up many application areas for nanostructured materials. Particularly interesting are superparamagnetic nanoparticles that respond to an external magnetic field, but do not permanently become magnetic themselves. Because of this interesting property their application is rising sharply in the various fields of environmental protection, including the removal of heavy metal ions from water, pesticides and other pollutants. Except in environmental science, today these particles enable advanced solutions in the fields of medicine and pharmacy, electronics, biotechnology, agronomy, computer science and informatics as well as the production of new and advanced nanostructured materials.

Particularly surface-functionalized superparamagnetic nanomaterials are gaining importance to many well-known and emerging areas of technology. They can be detected in the fields of catalysis, cosmetics, as markers for early cancer cells detection, targeted delivery system of active substances and genetic material, in photonics, photovoltaics, sensorics and more recently as advanced adsorbent materials in environmental science. Their properties are basically determined by the superparamagnetic nature of their nanostructured core and surface functionality, high ratio between surface area and volume, their specific surface area and porosity, hydrophilicity/hydrophobicity (oleophilicity/oleophobicity), biocompatibility and physico-chemical stability. Surface functionality of superparamagnetic adsorptive nanostructures can generally be carried out by physical and chemical methods of depositing thin films, e.g. chemical deposition from a vapor phase, physical vapor deposition and physical sputtering, electrochemical processes, or various polymerization techniques, such as "layer-by-layer" technique and the sol-gel processes, that allow direct silanization and surface functionalization of nanoparticles with alkoxide precursors.

### State of the art

According to currently known literature data, surface functionalized superparamagnetic nanomaterials with alkoxide precursors are being developed by conventional sol-gel method using hydrolysis and polycondensation of alkoxysilanes in an alcoholic medium in the the presence of a alkaline catalyst, with the purpose of forming a homogeneous siloxane coating obtaining specific physico-chemical properties, such as porosity, inertness, chemical and physical stability, etc., and the effective and selective removal of oil stains from water.

In the known and available literature there is no same or similar method of preparation of superparamagnetic adsorptive nanostructures that would provide capacity adsorption in the range 2.0 to 4.0 g of oil/g of adsorbent. In literature databases are mainly occurring sources, which indicate the use of versions of method with a solid core, based on inorganic oxide nanoparticles and organic or polymeric functional coating for the preparation of adsorptive material.

Zhu et al. have published an article in the journal ACS Applied Materials & Interfaces Bd. 2, American Chemical Society (2010), Nr. 11, S. 3141-6 "Fast and selective removal of oils from water surface via highly hydrophobic Core-Shell Fe2O3@C nanoparticles under magnetic field". Using the method of thermal decomposition they have prepared hydrophobic, superoleophilic nanoparticles that did not sink and have deducted water. The basis for the core was maghemite (γ-Fe₂O₃), which was coated with vinyltriethoxysilane. Prepared particles have absorbed the lubricating oil up to 3.8 times its own weight. These particles could also be re-used.

Zhang et al. have published an article in the journal Applied Surface Science Bd. 259 (2012), S. 719-725 "Synthesis and characterization of superhydrophobic and superparamagnetic film based on maghemite-polystyrene composite". They have coated maghemite nanoparticles with tetraethoxysilane, vinyltriethoxysilane and polystyrene. These nanoparticles have been used to prepare the superhydrophobic and superparamagnetic thin films.

Zhu et al. have published an article in the journal Applied Surface Science Bd. 258 (2012), Nr. 17, S. 6326-6330 "A simple method to synthesize modified Fe3O4 for the removal of organic pollutants on water surface". They have modified magnetite nanoparticles with sodium oleate (C₁₈H₃₃NaO₂). These nanoparticles were superhydrophobic, lipophilic and had good magnetic properties. They used them to clean up oil spills.

Gu et al. have published an article in the journal Applied Surface Science Bd. 301 (2014), S. 492-499 "Facile removal of oils from water surfaces through highly hydrophobic and magnetic polymer nanocomposites". They have coated magnetite nanoparticles with polystyrene / divinylbenzene and then with polimethylmetacrylate. Prepared nanoparticles were very hydrophobic, superoleophilic, did not sink and have shown high temperature stability, corrosion resistance and had characteristic water repellence. They adsorbed up to 3.6-times as much oil as their weight and showed the possibility of re-use.

Chen et al. have published an article in the journal Applied Surface Science Bd. 286, Elsevier B.V. (2013), S. 249- 256 "Synthesis of highly hydrophobic floating magnetic polymer nanocomposites for the removal of oils from water surface". They have prepared hydrophobic nanocomposites, which were based on hollow Fe₃O₄ nanoparticles. Surface of the particles have been modified with polystyrene. The material has repelled water and selectively absorbed up to 3 times greater mass of the oil compared with the mass of the particle. The particles had the property of floating on the water surface and the possibility for recycling.

Rashina et al. have published an article in the journal Industrial & Engineering Chemistry Research Bd. 53 American Chemical Society (2014), Nr. 40, S. 15725-15730 "Novel Coconut Oil Based Magnetite Nanofluid as an Ecofriendly Oil Spill Remover". They have prepared a magnetic fluid with magnetite nanoparticles based on coconut oil. This liquid was superhydrophobic as well as oleophilic and should be an environmentally friendly solution for cleaning oil spills.

Bao et al. have published an article in the journal Applied Surface Science Bd. 303 (2014), S. 473-480 "Facile preparation of superhydrophobic surfaces based on metal oxide nanoparticles". They have reported on the preparation of nanoparticles of magnetite (Fe₃O₄), zinc oxide (ZnO) and aluminum oxide (Al₂O₃), which were coated with polydimethylsiloxane. Prepared nanoparticles have been used in the production of superhydrophobic materials (glass, printing paper and cloth).

Fan et al. have published an article in the journal Surface and Coatings Technology Bd. 213 (2012), S. 8-14 "Study on fabrication of superhydrophobic and superparamagnetic functional coatings and its properties". They have prepared a hydrophobic composite with sol-gel process by coating the magnetite nanoparticles with trimethoxysilane and then with polymerized 2,2,3,4,4,4-heksafluorobutyl acrylate. Prepared particles have exhibited hydrophobic character and had superparamagnetic properties. They used them for producing coatings on the copper pads, which made that their surface became superhydrophobic.

Zhang et al have published an article in the journal Applied Surface Science Bd. 258 (2012), Nr. 12, S. 5080-5085 "Superhydrophobicity of superparamagnetic nanocomposite modified with polystyrene". They have prepared superhydrophobic and superparamagnetic nanocomposite materials by modifying nanoparticles of magnetite with tetraethoxysilane and 3-glycidoxypropyltrimethoxysilane. Subsequently, they have surrounded these particles with polystyrene, which has covalently bounded to the silica surface. The contact angle of water on nanoparticles was 160°.

Fang et al. have published an article in the journal ACS Applied Materials & Interfaces Bd. 2, American Chemical Society (2010), Nr. 5, S. 1449-55 "Magnet-induced temporary superhydrophobic coatings from one-pot synthesized hydrophobic magnetic nanoparticles". They have reported a one-step synthesis and functionalization of magnetite nanoparticles, prepared by the method of co-precipitation in the presence of tridekafluorooctiltriethoxysilane. The particles have been used for the production of superhydrophobic coatings on solid substrates such as glass, aluminum foil, textiles and others. The contact angle of water on these substrates has reached values up to 172°.

Brassard et al. have published an article in the journal Applied Sciences Bd. 2, Molecular Diversity Preservation International (2012), Nr. 4, S. 453-464 "Fluorine based superhydrophobic coatings". They have synthesized monodisperse nanoparticles of silicon oxide with a diameter of 120 nm and functionalised them with fluoroalkylsilane FAS-17 with chemical formula C₁₆H₁₉F₁₇O₃Si. These nanoparticles have been applied to aluminum alloys, silicon and glass surfaces, to make a transparent and superhydrophobic coating on them. The contact angle of water on these substrates was above 150°.

Xu et al. have published an article in the journal ACS Applied Materials & Interfaces Bd. 4, American Chemical Society (2012), Nr. 2, S. 1118-25 "Transparent, superhydrophobic surfaces from one-step spin coating of hydrophobic nanoparticles". They have prepared superhydrophobic nanoparticles of silica, functionalized with heptadekafluoro-1,1,2,2-tetrahydrodecyldimethylclorosilane. These particles have then been used in the preparation of superhydrophobic surfaces and achieved contact angles above 150° on these surfaces.

Sun et al. have published an article in the journal Applied Surface Science Bd. 257 (2011), Nr. 6, S. 2308-2312 "Superhydrophobicity of silica nanoparticles modified with polystyrene". They have coated silicon oxide nanoparticles with polystyrene. Produced nanoparticles were superhydrophobic with a contact angle of water at 159°.

Cho et al. have published an article in the Journal of Industrial and Engineering Chemistry Bd. 20 (2014), Nr. 4, S. 1231-1235 "Removal of oil by gelation using hydrophobic silica nanoparticles" They have coated silicon oxide nanoparticles with polydimethylsiloxane (PDMS). These particles exhibited a hydrophobic character and aplicability for gelation of oil in the mixture of oil-water, which enabled rapid separation and removal of the oil phase from the water.

Yang et al. have published an article in the journal Applied Surface Science Bd. 256 (2010), Nr. 13, S. 4095-4102 "Facile preparation of super-hydrophobic and super-oleophilic silica film on stainless steel mesh via sol-gel process". They have prepared superhydrophobic and superoleophilic silicate coating on stainless steel meshes with the use of tetraethoxysilane and methyltriethoxysilane by the sol-gel method.

Pazokifard et al. have published an article in the journal Advanced Powder Technology Bd. 23 (2012), Nr. 4 S. 428-436 "Processing of TiO2 nanoparticles with fluoroalkylsilanes in various pH-values: characterization and mechanism". They functionalised titanium dioxide (TiO₂) nanoparticles with a hydrophobic fluorosilane 1H, 1H, 2H, 2H perfluorooctiltriethoxysilane at different medium pH values. Prepared nanoparticles have demonstrated the possibility of use e.g. in the manufacture of self-cleaning coatings.

In International Patent Application WO2013076742 A1 is described the preparation of magnetic renewable nanocomposites C-Fe₃O₄ with high specific surface area by the thermolysis procedure of metal organic structures, which will be useful for removal and processing of oils, pigments and pollutants. Prepared materials had high surface area of about 437.8 m²/g, specific magnetization of the 26-49 emu/g, and contact angle of 143º.

In comparison with previously known methods of surface functionalized superparamagnetic nanostructures preparation, which include the use of alcohol medium and functional tri-alkoxide precursors, the object of the invention differs from them in preparation process, which involves the use of a combination of tetra-alkoxide precursor and functional tri-alkoxide precursor, in order to ensure homogeneous functional coating in a mixture of alcoholic medium, in the presence of alkaline catalyst and water at room temperature and provides the capacity to adsorb oils from water in the range 2.0 to 4.0 g of oil/g of adsorbent.

### Description of the invention

The essence of the method of surface functional superparamagnetic adsorptive nanostructures synthesis, according to the invention, lies in the fact that it includes in the first step the synthesis of iron oxide (CoFe₂O₄) superparamagnetic nanoparticles with a spinel crystal structure, with the use of Co₂⁺ and Fe₃⁺ metal salts, which may be sulfates, chlorides, nitrates, acetates in molar concentration range of 0.01-1 mol/l, and the co-precipitation of metal (II) ions in alkaline aqueous medium with a pH of 9-12, at an elevated temperature and in that way forming superparamagnetic product, using as a precipitation reagent metal (I) hydroxides, such as NaOH or KOH in a molar range 0.25 to 3.0 mol/L; in the second step colloidal stabilization of CoFe₂O₄ nanoparticles in acidic aqueous medium having a pH in the range 2-4; in the third step surface functionalization of nanoparticles with the use of colloidal CoFe₂O₄ nanoparticles with mass concentration (0.05 to 0.10) g/ml, tetra-alkoxide precursor tetraethyl orthosilicate (TEOS) in a molar ratio R (H₂O:TEOS) in range of 40 - 1050 and tri-alkoxide precursor ethyltrimethoxy (ETMS) in range from 0 to 10, alcoholic medium that consists of a mixture of lower alcohols such as methanol, ethanol, propanol, butanol, hexanol in a concentration range (0.1 to 1.0) mol%, the alkaline catalyst ammonia in a concentration range of (0.001 to 0.010) mol%, water in a concentration range 0.005 to 0.10 mol%, as well as process parameters, which are: temperature of the reaction is in the range from 25 °C to 50 °C, the reaction time in the range of 1 hour to 72 hours and the pH value of the medium in the range of 2.0 to 11.0, in a manner which ensures the removal of oily stains from water with a capacity for adsorption in the range 2.0 to 4.0 g of oil/g of adsorbent.

Surface functionalization of superparamagnetic nanoparticles CoFe₂O₄ with tetraethyl orthosilicate (TEOS) from the tetra-alkoxide group and ethyltrimethoxy (ETMS) from the tri-alkoxysilane group, due to their physico-chemical properties enables the formation of a homogeneous functional coating on the surface of the superparamagnetic CoFe₂O₄ nanoparticles, and in this manner the adsorption of oil stains with a capacity to adsorb in the range 2.0 to 4.0 g of oil/g of adsorbent, has proven to be an effective approach of improving the remediation of oil spills in given conditions. Compared to unmodified surface of CoFe₂O₄ superparamagnetic nanoparticles, surface functionalization of CoFe₂O₄ nanoparticles with TEOS/ETMS distinctly increases the rate of removing oils from water and additionally stabilizes the surface of nanoparticles.

Synthesis process of surface functionalized superparamagnetic adsorptive nanomaterials includes the following steps:
a) synthesis of superparamagnetic iron oxide nanoparticles with a spinel crystal structure in a manner of metal (II) salts co-precipitation in an aqueous medium;
b) a magnetic separation and washing with water;
c) electrostatic stabilization of prepared superparamagnetic iron oxide nanoparticles in an acidic aqueous medium;
d) a sol-gel process of coating of superparamagnetic iron oxide nanoparticles with a combination of tri- and tetra-alkoxide precursors in an alkaline alcoholic medium;
e) mixing, centrifugation and washing with distilled water, drying;
f) adsorption of oil stains from the water;
g) regeneration of the adsorbent by elution with an alcohol;
h) re-use in the process of adsorption.

First, in step a) by the method of co-precipitation in a basic aqueous solution with a pH value in the range of 9 to 12, we precipitate the metal (II) hydroxides, which are then by oxidation in air atmosphere oxidized to form the superparamagnetic CoFe₂O₄ nanoparticles with a spinel crystal structure. The precipitating agent can be an aqueous solution of sodium hydroxide (NaOH) or potassium hydroxide (KOH) with molar concentration range 0.25 to 3.0 mol/L. Preferentially used in the precipitation is 1 M aqueous solution of sodium hydroxide, with temperature of the precipitation 90 ± 2 °C and pH of the medium at 10.2 ± 0.2. Under this procedure the synthesized CoFe₂O₄ nanoparticles are spherical, monodisperse, with narrow particle size distribution in the range of 11.5 ± 1.9 nm, a specific surface area 82.5 ± 0.18 m²/g and a specific magnetization of 52 emu/g.

The product of the co-precipitation reaction in step b) is magneticly separated and thoroughly rinsed with distilled water.

Reaction product of co-precipitation is then in step c) suspended in an aqueous solution of nitric (V) acid and stirred until the formation of a colloidal solution containing CoFe₂O₄ particles, so that their mass concentration is in the range from 0.05 to 0.10 g/ml.

Colloidal suspension of CoFe₂O₄ particles from step c) is in step d) in volume ratio of (colloid: alcohol) = 1: 5.5, added to the alcoholic medium that consists of a mixture of lower alcohols such as methanol, ethanol, propanol, butanol, hexanol, that can be in any ratio, preferably 1, 1.3, 3, ∞. The concentration of these lower alcohols is in the range 0.1 to 1.0 mol%. The superparamagnetic CoFe₂O₄ nanoparticles are coated with sol-gel method, which involves reactions of hydrolysis and polycondensation of tetra-alkoxysilane and tri-alkoxysilane precursors in alcoholic medium, in the presence of catalyst and water. Precursor tetra-alkoxysilane has a general formula Si (OR ')₄ and tri-alkoxysilane R "Si (OR')₃, wherein R'and R" are selected from the group consisting of methyl, ethyl, propyl, butyl, hexyl. Preferably the tetra-alkoxide precursor is tetra-etoksisilan (TEOS) and tri-alkoxide precursor is ethyltrimethoxy (ETMS) in concentration range that provides mol ratio R (H2O:TEOS) in the range of 40-1050 and mol ratio P (TEOS:ETMS) in the range of 1-10. Catalyst for the reaction is ammonia or tetramethyl ammonium hydroxide with molar concentration in the range 1.0 to 7.0 mol/L, wherein the catalyst is preferably 25% aqueous ammonia. The reaction conditions are as follows:
- temperature between 20 °C and 90 °C;
- time 1 to 72 hours;
- pH between 8.5 and 11.5.

Preferentially reaction lasts 24 hours at room temperature. The resulting precipitate is alternately centrifuged 5 minutes at 4500 rotations/min and washed with a mixture of ethanol-water in 1:1 ratio. According to this procedure the superparamagnetic CoFe₂O₄ nanoparticles are homogenously coated with a functional alkoxide coating, based on ETMS, with thickness in the range of 1 nm - 10 nm, having a specific surface area in the range between 20 m²/g and 120 m²/g, and specific magnetization from 20 emu/g and 60 emu/g.

Followed by step e) in which the resulting coated superparamagnetic nanoparticles are centrifuged, washed with distilled water and dried.

Dried functionalized superparamagnetic adsorbent nanoparticles are in step f) crushed and added to the oil phase in an aqueous medium up to a content of nanoparticles in the concentration range (10 to 20) wt%, wherein the volume ratio of the oil phase and the aqueous medium is in the range 0.25 to 2.0. The contact time is adjusted in the range 1 - 120 min. Adsorbed oil phase is removed from the aqueous phase by the use of an external permanent magnet and the rest of the oil is determined gravimetrically.

Adsorbent after adsorption is in step g) recovered, in the manner that it is transferred to an alcoholic medium, preferably ethanol, exposed to ultrasonic agitation for 5-15 min, washed with ethanol, and regenerated adsorbent particles are magnetically separated for 30 min. Regenerated adsorbent nanoparticles are again rinsed with ethanol, dried and characterized gravimetrically.

Then follows step h) in which the regenerated adsorbent nanoparticles are reused in a new adsorption cycle.

The product of the process according to the invention are surface-functionalized superparamagnetic adsorptive nanomaterials, with surface functionality that enables adsorption of oil stains from water with a capacity to adsorb in the range 2.0 to 4.0 g of oil/g of adsorbent, wherein superparamagnetic core of iron oxide CoFe₂O₄ with spinel crystal structure, allows the responsiveness and controllability of the entire nanostructures under the influence of an external magnetic field and the regeneration and reuse of adsorption nanomaterial. Spinel structure of iron oxide can also be magnetite (Fe³⁺)₈[Fe^{2,5+}]₁₆O₃₂ or maghemite (Fe³⁺)₈[Fe³⁺_{5/6}□_{1/6}]₁₆O₃₂ where □ represents a gap () and [] brackets represent tetrahedral and octahedral interstitial sites in the spinel crystal structure, as well as doping them with various bi- and tri-valent metal ions, preferably d⁰, d³, d⁵, d⁸ and d¹⁰ ions of transition elements.

Functional superparamagnetic adsorptive nanomaterials prepared by the procedure according to the invention, are characterized by transmission electron microscopy (TEM), infrared Fourier transform spectroscopy (FT-IR), the determination of the specific surface area of particles (BET), identification of the specific magnetization (VSM), the determination of contact angle with water and determining the capacity to adsorb the oil.

### Example 1

In a glass container 1 molar aqueous solution of Co²⁺ and Fe²⁺ ions, from starting raw materials CoCl₂x6H₂O and FeCl₃x6H₂O, in ratio (Co²⁺: Fe³⁺) = 1:2 is prepared, which corresponds to stoichiometric composition of CoFe₂O₄. The reactor vessel is filled with 500 ml of 1 molar aqueous solution of NaOH as a precipitating reagent; the content is heated in an oil bath at temperature of 82 °C and 75 ml of 1 molar aqueous solution of Co²⁺/Fe³⁺ salts is added. Reaction is kept at moderate stirring, at a constant temperature, until the formation of dark brown precipitate of CoFe₂O₄ spinel product. Prepared CoFe₂O₄ nanoparticles are sedimented, remaining supernatant is discarded and the sediment colloidally stabilized in aqueous medium with nitric (V) acid for 1 hour at moderate mixing at room temperature. Particles are finally dispersed in distilled water to a mass concentration of 0.0914 g/ml.

Into alcoholic medium 2-propanol in the reaction vessel, 0.55 g/ml of colloidal solution of CoFe₂O₄ nanoparticles is added, and after that 0.561 mol% distilled water, 0.00548 mol% of 25% aqueous ammonia solution, the appropriate amount of precursor tetraethoxysilane (TEOS) and the precursor etiltrimetoksisilan (ETMS) are admixed to the mixture in the reaction vessel, in order to obtain a water-to-TEOS molar ratio R (H₂O:TEOS) = 1006 and TEOS-to-ETMS molar ratio P (TEOS: ETMS) = 2, respectively. The reaction mixture is stirred on magnetic stirrer for 24 hours at room temperature. The resulting precipitate is centrifuged 5 min at 7500 rotations/min, washed with water and ethanol and dried at 120 ºC.

A glass container is filled with water, which is measured gravimetrically. Afterwards, 0.250 ml of used Quartz INEO MC3 5W-30 motor oil with density of 0.85 g/cm³ and 50 mg of the dried product are added. The mass of glass container contents is gravimetrically measured. The mixture is allowed to stir for 5 minutes to establish equilibrium of adsorbent - adsorbate, and then the adsorbent is removed from the mixture by the use of an external magnetic field and weight of the residual contents in glass container is determined gravimetrically. Adsorbent with adsorbed oil is redispersed for further 5 minutes in ethanol and ultrasonic bath, and after that the adsorbent is removed from the liquid with the use of an external magnet; it is thoroughly washed with ethanol and dried at 120 ºC. After regeneration the adsorptive nanoparticles are dried 2h at 120 °C; weighed, and the percentage of regenerated nanoparticles and the adsorption capacity of the oil phase are calculated.

The samples are characterized by transmission electron microscopy (TEM), infrared spectroscopy by Fourier transformation (FT-IR), the determination of the specific surface area of particles (BET), identification of the specific magnetization (VSM), the determination of contact angle with water and determining the capacity to adsorb the oil.

### Example 2

In a glass container 1 molar aqueous solution of Co²⁺ and Fe²⁺ ions, from starting raw materials CoCl₂x6H₂O and FeCl₃x6H₂O, in ratio (Co²⁺: Fe³⁺) = 1:2 is prepared, which corresponds to stoichiometric composition of CoFe₂O₄. The reactor vessel is filled with 500 ml of 1 molar aqueous solution of NaOH as a precipitating reagent; the content is heated in an oil bath at temperature of 82 °C and 75 ml of 1 molar aqueous solution of Co²⁺/Fe³⁺ salts is added. Reaction is kept at moderate stirring, at a constant temperature, until the formation of dark brown precipitate of CoFe₂O₄ spinel product. Prepared CoFe₂O₄ nanoparticles are sedimented, remaining supernatant is discarded and the sediment colloidally stabilized in aqueous medium with nitric (V) acid for 1 hour at moderate mixing at room temperature. Particles are finally dispersed in distilled water to a mass concentration of 0.0914 g/ml.

Into alcoholic medium 2-propanol in the reaction vessel, 0.55 g/ml of colloidal solution of CoFe₂O₄ nanoparticles is added, and after that 0.561 mol% distilled water, 0.00548 mol% of 25% aqueous ammonia solution, the appropriate amount of precursor tetraethoxysilane (TEOS) and the precursor etiltrimetoksisilan (ETMS) are admixed to the mixture in the reaction vessel, in order to obtain a water-to-TEOS molar ratio R (H2O:TEOS) = 1006 and TEOS-to-ETMS molar ratio P (TEOS: ETMS) = 1, respectively. The reaction mixture is stirred on magnetic stirrer for 24 hours at room temperature. The resulting precipitate is centrifuged 5 min at 7500 rotations/min, washed with water and ethanol and dried at 120 ºC.

A glass container is filled with water, which is measured gravimetrically. Afterwards, 0.250 ml of used Quartz INEO MC3 5W-30 motor oil with density of 0.85 g/cm³ and 50 mg of the dried product are added. The mass of glass container contents is gravimetrically measured. The mixture is allowed to stir for 5 minutes to establish equilibrium of adsorbent - adsorbate, and then the adsorbent is removed from the mixture by the use of an external magnetic field and weight of the residual contents in glass container is determined gravimetrically. Adsorbent with adsorbed oil is redispersed for further 5 minutes in ethanol and ultrasonic bath, and after that the adsorbent is removed from the liquid with the use of an external magnet; it is thoroughly washed with ethanol and dried at 120 ºC. After regeneration the adsorptive nanoparticles are dried 2h at 120 °C; weighed, and the percentage of regenerated nanoparticles and the adsorption capacity of the oil phase are calculated.

The samples are characterized by transmission electron microscopy (TEM), infrared spectroscopy by Fourier transformation (FT-IR), the determination of the specific surface area of particles (BET), identification of the specific magnetization (VSM), the determination of contact angle with water and determining the capacity to adsorb the oil.

### Example 3

In a glass container 1 molar aqueous solution of Co²⁺ and Fe²⁺ ions, from starting raw materials CoCl₂x6H₂O and FeCl₃x6H₂O, in ratio (Co²⁺: Fe³⁺) = 1:2 is prepared, which corresponds to stoichiometric composition of CoFe₂O₄. The reactor vessel is filled with 500 ml of 1 molar aqueous solution of NaOH as a precipitating reagent; the content is heated in an oil bath at temperature of 82 °C and 75 ml of 1 molar aqueous solution of Co²⁺/Fe³⁺ salts is added. Reaction is kept at moderate stirring, at a constant temperature, until the formation of dark brown precipitate of CoFe₂O₄ spinel product. Prepared CoFe₂O₄ nanoparticles are sedimented, remaining supernatant is discarded and the sediment colloidally stabilized in aqueous medium with nitric (V) acid for 1 hour at moderate mixing at room temperature. Particles are finally dispersed in distilled water to a mass concentration of 0.0914 g/ml.

Into alcoholic medium 2-propanol in the reaction vessel, 0.55 g/ml of colloidal solution of CoFe₂O₄ nanoparticles is added, and after that 0.561 mol% distilled water, 0.00548 mol% of 25% aqueous ammonia solution, the appropriate amount of precursor tetraethoxysilane (TEOS) and the precursor etiltrimetoksisilan (ETMS) are admixed to the mixture in the reaction vessel, in order to obtain a water-to-TEOS molar ratio R (H2O:TEOS) = 1006 and TEOS-to-ETMS molar ratio P (TEOS: ETMS) = 0.5, respectively. The reaction mixture is stirred on magnetic stirrer for 24 hours at room temperature. The resulting precipitate is centrifuged 5 min at 7500 rotations/min, washed with water and ethanol and dried at 120 ºC.

A glass container is filled with water, which is measured gravimetrically. Afterwards, 0.250 ml of used Quartz INEO MC3 5W-30 motor oil with density of 0.85 g/cm³ and 50 mg of the dried product are added. The mass of glass container contents is gravimetrically measured. The mixture is allowed to stir for 5 minutes to establish equilibrium of adsorbent - adsorbate, and then the adsorbent is removed from the mixture by the use of an external magnetic field and weight of the residual contents in glass container is determined gravimetrically. Adsorbent with adsorbed oil is redispersed for further 5 minutes in ethanol and ultrasonic bath, and after that the adsorbent is removed from the liquid with the use of an external magnet; it is thoroughly washed with ethanol and dried at 120 ºC. After regeneration the adsorptive nanoparticles are dried 2h at 120 °C; weighed, and the percentage of regenerated nanoparticles and the adsorption capacity of the oil phase are calculated.

The samples are characterized by transmission electron microscopy (TEM), infrared spectroscopy by Fourier transformation (FT-IR), the determination of the specific surface area of particles (BET), identification of the specific magnetization (VSM), the determination of contact angle with water and determining the capacity to adsorb the oil.

### Example 4

In a glass container 1 molar aqueous solution of Co²⁺ and Fe²⁺ ions, from starting raw materials CoCl₂x6H₂O and FeCl₃x6H₂O, in ratio (Co²⁺: Fe³⁺) = 1:2 is prepared, which corresponds to stoichiometric composition of CoFe₂O₄. The reactor vessel is filled with 500 ml of 1 molar aqueous solution of NaOH as a precipitating reagent; the content is heated in an oil bath at temperature of 82 °C and 75 ml of 1 molar aqueous solution of Co²⁺/Fe³⁺ salts is added. Reaction is kept at moderate stirring, at a constant temperature, until the formation of dark brown precipitate of CoFe₂O₄ spinel product. Prepared CoFe₂O₄ nanoparticles are sedimented, remaining supernatant is discarded and the sediment colloidally stabilized in aqueous medium with nitric (V) acid for 1 hour at moderate mixing at room temperature. Particles are finally dispersed in distilled water to a mass concentration of 0.0914 g/ml.

Into alcoholic medium 2-propanol in the reaction vessel, 0.55 g/ml of colloidal solution of CoFe₂O₄ nanoparticles is added, and after that 0.561 mol% distilled water, 0.00548 mol% of 25% aqueous ammonia solution, the appropriate amount of precursor tetraethoxysilane (TEOS) and the precursor etiltrimetoksisilan (ETMS) are admixed to the mixture in the reaction vessel, in order to obtain a water-to-TEOS molar ratio R (H2O:TEOS) = 1006 and TEOS-to-ETMS molar ratio P (TEOS: ETMS) = 0.25, respectively. The reaction mixture is stirred on magnetic stirrer for 24 hours at room temperature. The resulting precipitate is centrifuged 5 min at 7500 rotations/min, washed with water and ethanol and dried at 120 ºC.

A glass container is filled with water, which is measured gravimetrically. Afterwards, 0.250 ml of used Quartz INEO MC3 5W-30 motor oil with density of 0.85 g/cm³ and 50 mg of the dried product are added. The mass of glass container contents is gravimetrically measured. The mixture is allowed to stir for 5 minutes to establish equilibrium of adsorbent - adsorbate, and then the adsorbent is removed from the mixture by the use of an external magnetic field and weight of the residual contents in glass container is determined gravimetrically. Adsorbent with adsorbed oil is redispersed for further 5 minutes in ethanol and ultrasonic bath, and after that the adsorbent is removed from the liquid with the use of an external magnet; it is thoroughly washed with ethanol and dried at 120 ºC. After regeneration the adsorptive nanoparticles are dried 2h at 120 °C; weighed, and the percentage of regenerated nanoparticles and the adsorption capacity of the oil phase are calculated.

The samples are characterized by transmission electron microscopy (TEM), infrared spectroscopy by Fourier transformation (FT-IR), the determination of the specific surface area of particles (BET), identification of the specific magnetization (VSM), the determination of contact angle with water and determining the capacity to adsorb the oil.

Characteristics of prepared functional superparamagnetic adsorptive nanomaterials are given in Table 1 and in Figures, which show:

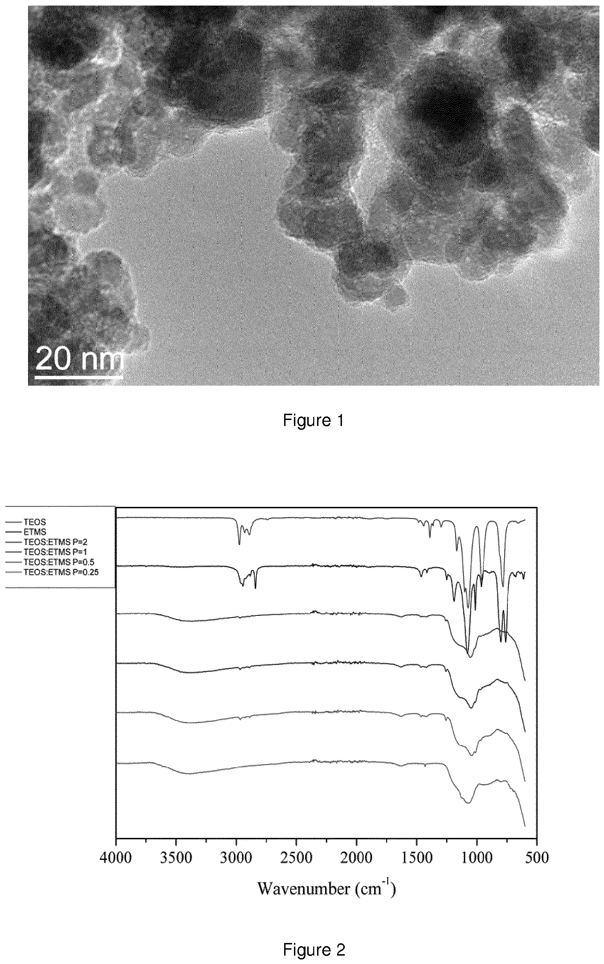

- Figure 1: TEM micrograph of CoFe₂O₄ nanoparticles functionalized with TEOS/ETMS
- Figure 2: FTIR spectrum of CoFe₂O₄ nanoparticles functionalized with TEOS/ETMS

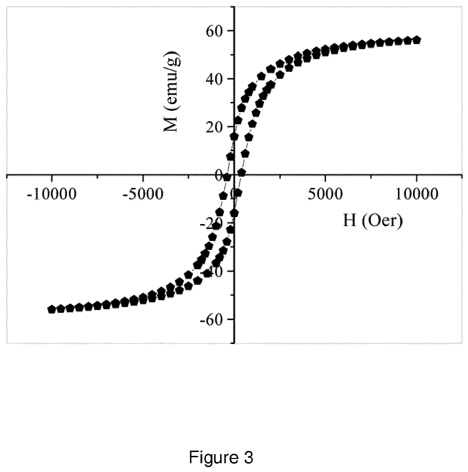

- Figure 3: Magnetic properties of CoFe₂O₄ nanoparticles functionalized with TEOS/ETMS

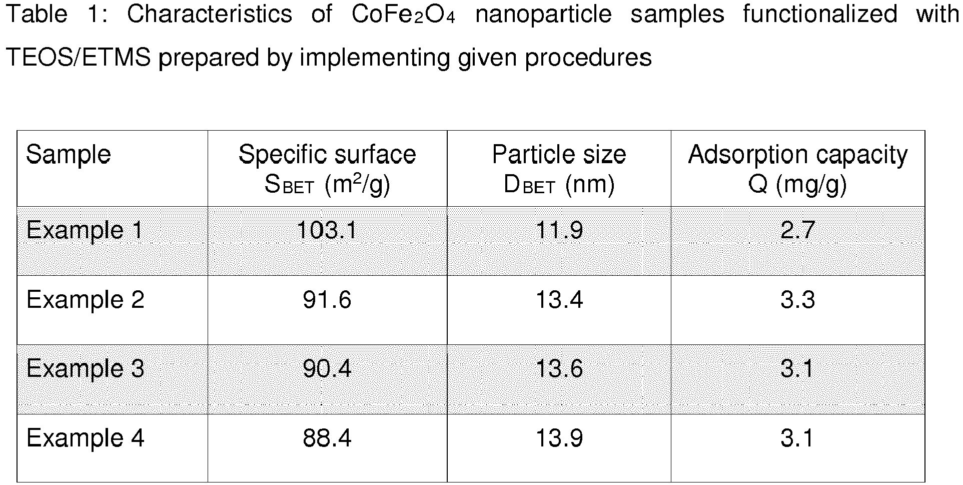

Magnetic properties of CoFe₂O₄ nanoparticles functionalized with TEOS/ETMS: Coercivity (Hci): 376.94 G
Magnetization (Ms): 56.069 emu/g
Remanence (Mr): 15.891 emu/g

Preparation process of superparamagnetic adsorptive materials which is based on coating of the spinel crystal structured iron oxide nanoparticles using functional organics based on an alkoxide precursor ethyltrimethoxysilane (ETMS) and according to the invention, formation of adsorptive nanostructures, allows wide application of adsorbents in the field of environmental protection. Adsorbents will be used for binding and removing oil stains from water and will, due to distinctive magnetic properties, enable responsiveness and maneuverability of the entire nanostructures under the influence an external magnetic field. At the same time the preparation process allows the formation of uniform size nanostructures, with appropriate magnetic characteristics, and with appropriate functional coating which will ensure the capacity to adsorb oil from the water in the range 2.0 to 4.0 g of oil/g of adsorbent. In the process, according to the invention, environmentally friendly chemicals are used with small number of organic solvents, as well as the lowest possible temperature of the preparation and application of the adsorbent material.

Preparation process of superparamagnetic adsorptive nanostructures with a homogeneous functional organic coating based on ethyltrimethoxysilane (ETMS), allows adsorption of oil stains with a capacity in the range 2.0 to 4.0 g of oil/g of adsorbent, and nanostructured core based on iron oxide nanoparticles CoFe₂O₄ with spinel crystal structure, enables responsiveness and maneuverability of nanostructures, under the influence of external magnetic field and further via the functionality of the surface, also binding and removing oil stains, recovery and re-use.

## Claims

1. Preparation process of functionalized superparamagnetic adsorbents with ethyltrimethoxy (ETMS) as precursor, the said process comprising:
a. synthesis of superparamagnetic iron oxide nanoparticles (CoFe₂O₄) with a spinel crystal structure, using Co²⁺ and Fe³⁺ metal salts, which may be sulfates, chlorides, nitrates, acetates, in a molar concentration range from 0.01 to 1 mol/l and co-precipitation of metal (II) ions in a basic aqueous medium having a pH value from 9 to 12, at an elevated temperature, and in this way the formation of superparamagnetic product, using metal (I) hydroxides, such as NaOH or KOH in a molar range 0.25 to 3.0 mol/L, as a precipitation reagent;
b. colloidal stabilization of CoFe₂O₄ nanoparticles in acidic aqueous medium having a pH in the range from 2 to 4;
c. surface functionalization of nanoparticles using colloidal solution of CoFe₂O₄ nanoparticles in weight concentration 0.05 to 0.10 g/ml, tetra-alkoxide precursor tetraethoxysilane (TEOS) in the mol ratio R (H₂O:TEOS) in the range of 40 to 1050 and tri-alkoxide precursor ethyltrimethoxysilane (ETMS) in mol ratio P (TEOS:ETMS) in the range from 0 to 10, with an alcoholic medium that consists of a mixture of lower alcohols such as methanol, ethanol, propanol, butanol, hexanol in the concentration range 0.1 to 1.0 mol%, the alkaline catalyst ammonia in a concentration range 0.001 to 0.010 mol%, water in the concentration range from 0.005 to 0.10 mol%, and the process parameters, which are: temperature of the reaction is in range 25 °C to 50 °C, reaction time in range of 1 hour to 72 hours, and the pH value of the medium in the range of 2.0 to 11.0, in a manner that ensures the removal of oil stains from water with a capacity of adsorption in the range 2.0 to 4.0 g of oil/g of adsorbent.

2. The process according to claim 1, **characterized in that** preparation of 1 molar aqueous solution of Co²⁺ and Fe²⁺ ions from the incoming raw materials CoCl₂x6H₂O and FeCl₃x6H₂O in a ratio (Co²⁺:Fe³⁺) = 1:2, which corresponds to stoichiometric composition of CoFe₂O₄, in a glass container; that the reactor vessel is filled with 500 ml of 1 molar aqueous solution of NaOH as a precipitating reagent, and the content is heated in an oil bath at a temperature of 82 °C and added to it is 75 ml of 1 molar aqueous solutions of Co²⁺/Fe³⁺ salts; that the reaction is kept at moderate stirring, at constant temperature until the occurrence of dark brown precipitate of CoFe₂O₄ spinel product; to sediment prepared CoFe₂O₄ nanoparticles, decant the residual liquid, and to colloidally stabilize particles by moderate agitation in aqueous medium with nitric (V) acid for 1 hour at room temperature; that the particles are sedimented and dispersed in distilled water to a mass concentration of 0.0914 g/ml; that to 2-propanol in a reaction vessel is added 0.55 g/ml CoFe₂O₄ nanoparticles in colloidal form, 0.561 mol% distilled water, 0.00548 mol% of 25% aqueous ammonia solution, the appropriate amount of precursor tetraethoxysilane (TEOS), to achieve mol ratio R (H₂O:TEOS) = 1006, and precursor ethyltrimethoxysilane (ETMS) to achieve mol ratio P (TEOS:ETMS) = 2; that the reaction mixture is stirred on magnetic stirrer for 24 hours at room temperature; that the resulting precipitate is centrifuged for 5 min at 7500 rotations/min, washed with water and ethanol and dried at 120 ºC.

3. The process according to claim 1, **characterized in that** preparation of 1 molar aqueous solution of Co²⁺ and Fe²⁺ ions from the incoming raw materials CoCl₂x6H₂O and FeCl₃x6H₂O in a ratio (Co²⁺:Fe³⁺) = 1:2, which corresponds to stoichiometric composition of CoFe₂O₄, in a glass container; that the reactor vessel is filled with 500 ml of 1 molar aqueous solution of NaOH as a precipitating reagent, and the content is heated in an oil bath at a temperature of 82 °C and added to it is 75 ml of 1 molar aqueous solutions of Co²⁺/Fe³⁺ salts; that the reaction is kept at moderate stirring, at constant temperature until the occurrence of dark brown precipitate of CoFe₂O₄ spinel product; to sediment prepared CoFe₂O₄ nanoparticles, decant the residual liquid, and to colloidally stabilize particles by moderate agitation in aqueous medium with nitric (V) acid for 1 hour at room temperature; that the particles are sedimented and dispersed in distilled water to a mass concentration of 0.0914 g/ml; that to 2-propanol in a reaction vessel is added 0.55 g/ml CoFe₂O₄ nanoparticles in colloidal form, 0.561 mol% distilled water, 0.00548 mol% of 25% aqueous ammonia solution, the appropriate amount of precursor tetraethoxysilane (TEOS), to achieve mol ratio R (H₂O:TEOS) = 1006, and precursor ethyltrimethoxysilane (ETMS) to achieve mol ratio P (TEOS:ETMS) = 1; that the reaction mixture is stirred on magnetic stirrer for 24 hours at room temperature; that the resulting precipitate is centrifuged for 5 min at 7500 rotations/min, washed with water and ethanol and dried at 120 ºC.

4. The process according to claim 1, **characterized in that** preparation of 1 molar aqueous solution of Co²⁺ and Fe²⁺ ions from the incoming raw materials CoCl₂x6H₂O and FeCl₃x6H₂O in a ratio (Co²⁺:Fe³⁺) = 1:2, which corresponds to stoichiometric composition of CoFe₂O₄, in a glass container; that the reactor vessel is filled with 500 ml of 1 molar aqueous solution of NaOH as a precipitating reagent, and the content is heated in an oil bath at a temperature of 82 °C and added to it is 75 ml of 1 molar aqueous solutions of Co²⁺/Fe ³⁺ salts; that the reaction is kept at moderate stirring, at constant temperature until the occurrence of dark brown precipitate of CoFe₂O₄ spinel product; to sediment prepared CoFe₂O₄ nanoparticles, decant the residual liquid, and to colloidally stabilize particles by moderate agitation in aqueous medium with nitric (V) acid for 1 hour at room temperature; that the particles are sedimented and dispersed in distilled water to a mass concentration of 0.0914 g/ml; that to 2-propanol in a reaction vessel is added 0.55 g/ml CoFe₂O₄ nanoparticles in colloidal form, 0.561 mol% distilled water, 0.00548 mol% of 25% aqueous ammonia solution, the appropriate amount of precursor tetraethoxysilane (TEOS), to achieve mol ratio R (H₂O:TEOS) = 1006, and precursor ethyltrimethoxysilane (ETMS) to achieve mol ratio P (TEOS:ETMS) = 0,5; that the reaction mixture is stirred on magnetic stirrer for 24 hours at room temperature; that the resulting precipitate is centrifuged for 5 min at 7500 rotations/min, washed with water and ethanol and dried at 120 ºC.

5. The process according to claim 1, **characterized in that** preparation of 1 molar aqueous solution of Co²⁺ and Fe²⁺ ions from the incoming raw materials CoCl₂x6H₂O and FeCl₃x6H₂O in a ratio (Co²⁺:Fe³⁺) = 1:2, which corresponds to stoichiometric composition of CoFe₂O₄, in a glass container; that the reactor vessel is filled with 500 ml of 1 molar aqueous solution of NaOH as a precipitating reagent, and the content is heated in an oil bath at a temperature of 82 °C and added to it is 75 ml of 1 molar aqueous solutions of Co²⁺/Fe ³⁺ salts; that the reaction is kept at moderate stirring, at constant temperature until the occurrence of dark brown precipitate of CoFe₂O₄ spinel product; to sediment prepared CoFe₂O₄ nanoparticles, decant the residual liquid, and to colloidally stabilize particles by moderate agitation in aqueous medium with nitric (V) acid for 1 hour at room temperature; that the particles are sedimented and dispersed in distilled water to a mass concentration of 0.0914 g/ml; that to 2-propanol in a reaction vessel is added 0.55 g/ml CoFe₂O₄ nanoparticles in colloidal form, 0.561 mol% distilled water, 0.00548 mol% of 25% aqueous ammonia solution, the appropriate amount of precursor tetraethoxysilane (TEOS), to achieve mol ratio R (H₂O:TEOS) = 1006, and precursor ethyltrimethoxysilane (ETMS) to achieve mol ratio P (TEOS:ETMS) = 0,25; that the reaction mixture is stirred on magnetic stirrer for 24 hours at room temperature; that the resulting precipitate is centrifuged for 5 min at 7500 rotations/min, washed with water and ethanol and dried at 120 ºC.

6. Superparamagnetic adsorptive nanomaterials produced according to any of preceding claims, **characterized in that** they are used for adsorption of oil stains and spills in waters.

7. Superparamagnetic adsorptive nanomaterials according to claim 6, **characterized in that** the structure of the spinel iron oxide can also be magnetite (Fe³⁺)₈[Fe^{2,5+}]₁₆O₃₂ or maghemite (Fe³⁺)₈[Fe³⁺_{5/6}□_{1/6}]₁₆O₃₂, where □ represents gap, () and [] brackets tetrahedral and octahedral represent interstitial sites in spinel crystal structure, and doping of them with a variety of two- and three-valent metal ions, preferably with d⁰, d³, d⁵, d⁸ and d¹⁰ ions of transition elements.

8. Superparamagnetic adsorptive nanomaterials according to claim 6, **characterized in that** the functionality of the surface allows the adsorption of oil stains from water with a capacity to adsorb in the range 2.0 to 4.0 g of oil/g adsorbent, wherein the superparamagnetic core of iron oxide CoFe₂O₄ with a spinel crystal structure, allows responsiveness and controllability of the whole nanostructures under the influence of an external magnetic field and the regeneration and re-use of the adsorbent nanomaterial.

9. Superparamagnetic adsorptive nanomaterials according to any of the claims from 6 to 8, **characterized in that** the nanoparticles of the adsorbent can again be used in a new adsorption cycle.
